**Europäisches Patentamt**

**European Patent Office**

**Office européen des brevets**

(19)

(11) **EP 1 154 344 B1**

(12) **EUROPÄISCHE PATENTSCHRIFT**

(45) Veröffentlichungstag und Bekanntmachung des Hinweises auf die Patenterteilung:
**09.03.2005 Patentblatt 2005/10**

(51) Int Cl.$^7$: **G05F 1/613**

(21) Anmeldenummer: **01111532.6**

(22) Anmeldetag: **11.05.2001**

(54) **Verfahren zur Regelung einer Spannung in einer elektronischen Schaltung und elektronische Schaltung zur Durchführung des Verfahrens**

Method of regulating a voltage in an electronic circuit and an electronic circuit to perform the method

Procédé de régulation de la tension électrique d'un circuit électronique et circuit électronique permettant de mettre en oeuvre ledit procédé

(84) Benannte Vertragsstaaten:
**DE ES FR GB IT**
Benannte Erstreckungsstaaten:
**SI**

(30) Priorität: **12.05.2000 DE 10023347**

(43) Veröffentlichungstag der Anmeldung:
**14.11.2001 Patentblatt 2001/46**

(73) Patentinhaber: **Diehl AKO Stiftung & Co. KG**
**88239 Wangen (DE)**

(72) Erfinder: **Fluhrer, Henry**
**90489 Nürnberg (DE)**

(74) Vertreter: **Diehl Patentabteilung**
**c/o Diehl Stiftung & Co. KG**
**Stephanstrasse 49**
**90478 Nürnberg (DE)**

(56) Entgegenhaltungen:
| | |
|---|---|
| US-A- 4 241 278 | US-A- 5 307 003 |
| US-A- 5 698 970 | US-A- 5 982 156 |
| US-A- 6 034 513 | |

• PATENT ABSTRACTS OF JAPAN vol. 1997, no. 07, 31. Juli 1997 (1997-07-31) & JP 09 070173 A (TOHOKU RICOH CO LTD), 11. März 1997 (1997-03-11)
• PATENT ABSTRACTS OF JAPAN vol. 1998, no. 07, 31. März 1998 (1998-03-31) & JP 07 084656 A (O KOKKA), 31. März 1995 (1995-03-31)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 154 344 B1

**Beschreibung**

Die Erfindung betrifft ein Verfahren zur Regelung einer Spannung in einer elektronischen Schaltung nach dem Oberbegriff des Patentanspruchs 1 sowie eine elektronische Schaltung zur Durchführung des Verfahrens.

Für (vor allem kleine bzw. preisgünstige) elektronische Schaltungen werden zunehmend Kondensatornetzteile anstelle der früher üblichen Transformatoren verwendet. Diese bestehen im Wesentlichen aus einem Widerstand, einem Kondensator, einem Zweiweggegleichrichter und einem Ladekondensator, wobei der Widerstand und der Kondensator in Reihe geschaltet und an einen Eingang des Zweiweggegleichrichters angeschlossen sind, während der Ladekondensator an die beiden Ausgänge des Zweiweggegleichrichters angeschlossen ist. Solch ein Kondensatornetzteil liefert einen konstanten Gleichstrom, der sich bei stabiler Netzspannung im Wesentlichen aus der Kapazität des Kondensators ergibt. Die Spannung, die an den Ausgängen des Zweiweggegleichrichters und damit des Kondensatornetzteils angeschlossenen Verbrauchern anliegt, hängt vom Gleichstromwiderstand des Verbrauchers nach der Formel $U = R \times I$ ab.

Ein großes Problem solcher Kondensatornetzteile ist die Tatsache, dass aufgrund von Netzspannungsschwankungen und Bauteiltoleranzen der von dem Kondensatornetzteil gelieferte Konstantstrom großen Toleranzen unterworfen ist, welche zum Teil über 50% betragen. Damit weist natürlich auch die Spannung, die an den angeschlossenen Verbrauchern abfall, dieselben großen Toleranzen auf. Deshalb sind bei herkömmlichen Kondensatornetzteilen zusätzlich Maßnahmen zur Spannungsstabilisierung z. B. in Form einer Stabilisierungsschaltung, einer Spannungsbegrenzung oder eines Spannungsreglers notwendig.

Aus der JP 04181505 A ist eine mit einer Wechselspannungsquelle betriebene Schaltung bekannt, bei welcher ein Verbraucher über einen parallel geschalteten Schalter getaktet kurzgeschlossen werden kann, wobei die Kurzschlusszeit im Taktverhältnis des Schalters verlängert wird, wenn die anliegende Spannung einen bestimmten Wert überschreitet, und verkürzt wird, wenn die anliegende Spannung unter diesen Wert fällt.

In der US 4,241,278 ist eine Regelschaltung für ein Vakuum-Fluoreszenz-Anzeigeelement (VFD) beschrieben, bei welcher die Heizung des VFD getaktet angesteuert wird, wobei das Ein-Aus-Taktverhältnis der Heizungsansteuerung verkleinert wird, wenn die Heizspannung steigt, und vergrößert wird, wenn die Heizspannung sinkt. Dadurch wird erreicht, dass die Heizung des VFD auch bei schwankender Heizspannung im Mittel stets mit derselben elektrischen Heizleistung betrieben wird.

Ausgehend von dem genannten Stand der Technik ist es die Aufgabe der Erfindung, das gattungsgemäße Verfahren derart weiterzubilden, dass auch ein VFD angesteuert werden kann, und dazu eine elektronische Schaltung vorzuschlagen.

Diese Aufgabe wird durch ein Verfahren mit dem Merkmalen des Patentanspruchs 1 sowie eine elektronische Schaltung gemäß Anspruch 4 erfüllt. Die abhängigen Ansprüche enthalten Ausführungsformen und Weiterbildungen der Erfindung.

Der Grundgedanke der Erfindung ist, dass die Spannung, welche über einen an eine Konstantstromquelle wie z. B. einem Kondensatornetzteil angeschlossenen Verbraucher abfällt, im zeitlichen Mittel dann erniedrigt wird, wenn der Verbraucher über einen parallelen Stromzweig mit kleinerem bzw. vernachlässigbar kleinem Widerstand zumindest zeitweise bzw. getaktet kurzgeschlossen wird.

Wird dieser parallele Stromzweig über einen in ihm befindlichen Schalter getaktet geschlossen und geöffnet, so kann über das Verhältnis der Einschalt- zur Ausschalt-Zeit (Taktverhältnis) dieses Schalters der zeitliche Mittelwert der an dem Verbraucher anliegenden Spannung innerhalb gewisser Grenzen eingestellt werden. Dabei bewirkt eine Erhöhung des Taktverhältnisses (Verlängerung der Einschalt- gegenüber der Ausschalt-Zeit) eine Erniedrigung der Spannung und eine Erniedrigung des Taktverhältnisses (Verkürzung der Einschalt- gegenüber der Ausschalt-Zeit) eine Erhöhung der Spannung.

Auf diese Weise kann auch bei Nichtbenötigung der Funktion des Verbrauchers die an dem Verbraucher anliegende Spannung durch eine Erhöhung des Taktverhältnisses erniedrigt werden, was zur Folge hat, der elektrische Leistungsverbrauch der Schaltung verringert wird, da zwar der von der Konstantstromquelle erzeugte Stromfluß konstant bleibt, aber der Spannungsabfall in der Schaltung erniedrigt wird. Auf diese Weise kann bei Geräten mit Konstantstromquelle, bei denen stets ein konstanter Strom fließt, aber die Funktion des Verbrauchers nicht andauernd benötigt wird, eine erhebliche Einsparung an elektrischer Energie erreicht werden.

Da als Verbraucher ein Vakuum-Fluoreszenz-Anzeigeelement (VFD) verwendet wird, bei welchem die Heizung in Reihe zu einem elektronischen Schalter geschaltet ist und über diesen getaktet angesteuert wird, wird der die Heizung und den Schalter beinhaltende Stromzweig als zu dem Verbraucher paralleler Stromzweig angesehen, wobei die röhrenähnliche Anordnung des VFD mit Kathode und Anode als eigentlicher (hochomiger) Verbraucher anzusehen ist. So wird die an der "Röhre" des VFD anliegende Spannung direkt über das Taktverhältnis der Heizungsansteuerung geregelt. Dies ist insbesondere schon deswegen interessant, da hierzu keine weiteren Bauteile in der elektronischen Schaltung benötigt werden, die nicht schon zum normalen Betrieb des VFD notwendig sind.

In Weiterbildung der Erfindung ist vorgesehen, dass die an dem Verbraucher anliegende Spannung bzw. eine mit dieser korrelierte Teilspannung einem die Taktung steuernden Steuerelement zugeführt und von diesem erfaßt wird, dass das Steuerelement die erfaßte Spannung mit einer Soll-Spannung, welche in einem Speicher hinterlegt ist, vergleicht und das Taktverhältnis des Schalters erhöht oder erniedrigt, je nachdem ob die erfaßte Spannung höher oder niedriger als die Soll-Spannung ist.

Die Zuführung der an dem Verbraucher anliegenden Spannung zu dem Steuerelement kann direkt erfolgen, falls das Steuerelement einen entsprechenden Eingang aufweist, oder auch über einen Spannungsteiler, wobei im letzteren Fall dem Steuerelement eine (betragsmäßig) kleinere Teilspannung, die jedoch in fester Beziehung zu der an dem Verbraucher abfallenden Spannung steht, zugeführt wird. Falls das Steuerelement selbst direkt an der an dem Verbraucher anliegenden Spannung anliegt, ist eine weitere Zuführungsleitung nicht mehr nötig, da die Spannung ja schon über die Stromversorgungsleitung zugeführt ist. In diesem Fall ist jedoch sicherzustellen, dass zum einen das Steuerelement auch bei variabler anliegenden Spannung voll funktionsfähig bleibt und dass zum anderen dem Steuerelement über ein Spannungsnormal eine Referenzspannung zugeführt wird, so dass ein Messen der an dem Verbraucher anliegenden Spannung durch Vergleich der zugeführten mit der Referenzspannung möglich ist.

Der Vorteil der Erfindung liegt darin, dass die Regelung der Spannung in einer elektronischen Schaltung mit Konstantstromquelle im vorliegenden Fall des VFD mit der bereits über einen elektronischen Schalter angesteuerten Heizung ganz ohne schaltungstechnischen Aufwand möglich ist. Damit entfällt der Aufwand in Form eines Spannungsreglers, einer Stabilisierungsschaltung oder einer Spannungsbegrenzung, der sonst bei Vorliegen von Netzspannungsschwankungen oder Bauteiltoleranzen erforderlich wäre. Zudem kann mit dem erfindungsgemäßen Verfahren auf einfache Weise ein Leistungsspar-Modus realisiert werden, um den Leistungsverbrauch der Schaltung bei Nichtbenötigung der Funktion des Verbrauchers zu verringern.

Im folgenden wird die Erfindung anhand zweier Ausführungsbeispiele näher erläutert. Es zeigen:

Figur 1     eine Prinzip-Schaltungsskizze einer elektronischen Schaltung zur Durchführung des erfindungsgemäßen Verfahrens,

Figur 1a     eine Prinzip-Schaltungsskizze ohne Kondensatornetzteil gemäß einer Variante der Ausführungen von Figur 1.

Figur 2a     einen zeitlichen Verlauf der Schalteransteuerung und der an dem Verbraucher anliegenden Spannung und

Figur 2b     einen weiteren zeitlichen Verlauf gemäß Figur 2a mit anderem Taktverhältnis,

Eine elektronische Schaltung 1 weist als Konstantstromquelle ein Kondensatornetzeil 2 auf. Dieses besteht aus einem Widerstand R1, einem Kondensator C1, einem Zweiwegegleichrichter 3, einem Ladekondensator C2 und einer Zener-Diode Z1. Das Kondensatornetzteil 2 ist mit Anschlüssen 4 und 4a an die Netzspannung angeschlossen, der Ausgang - des Zweiwegegleichrichters 3 ist geerdet. Der Ladekondensator C2 dient der Glättung des zeitlichen Verlaufes der an den Ausgängen des Zweiwegegleichrichters 3 anliegenden Spannung, die Zener-Diode Z1 begrenzt diese Spannung nach oben, um an das Kondensatornetzteil 2 angeschlossene Bauteile vor Überspannung zu schützen.

Der an das Kodensatometzteil 2 angeschlossene Verbraucher ist ein Vakuum-Fluoreszenz-Anzeigeelement (VFD) 9, welches eine Anode 10 und ein Kathode 11 aufweist, wobei die Kathode 11 gleichzeitig als Heizung 12 dient. Als der eigentlich hochomige Verbraucher ist hier die Strecke von der Anode 11 zur Kathode 10 anzusehen. Die Heizung 12 ist in Reihe mit einem Transistor T1 in einen Stromzweig 7 geschaltet. Ein Mikrocontroller 6 ist an die Ausgänge + und - des Zweiwegegleichrichters 3 und damit des Kondensatornetzteils 2, also direkt an die Spannung U angeschlossen, was nur möglich ist, wenn er mit variablen Spannungen betreibbar ist.

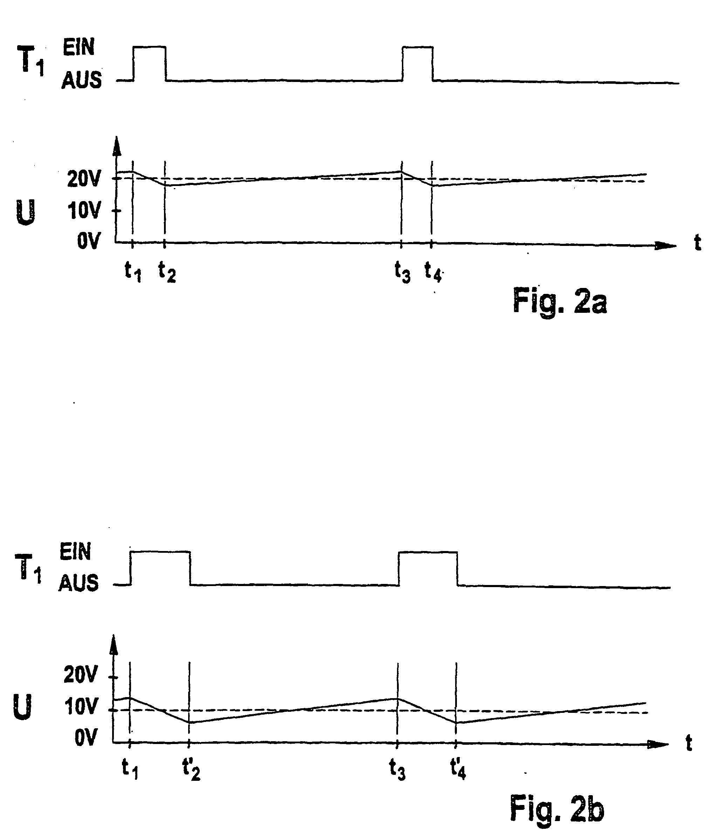

Der Mikrocontroller 6 steuert den Transistor T1 getaktet an. Der zeitliche Verlauf dieser Ansteuerung sowie des sich ergebenden Wertes für die Spannung U ist aus Figur 2a ersichtlich. Zum Zeitpunkt t1 wird der Transistor T1 durchgeschaltet, d. h. der Stromzweig 7 eingeschaltet. Der Ladekondensator C2 entlädt sich über den Stromzweig 7, und die Spannung U bricht zusammen, bis zum Zeitpunkt t2 der Transistor T1 auf Sperren umgesteuert, d. h. ausgeschaltet wird. Daraufhin lädt sich der Ladekondensator C2 wieder auf und die Spannung U steigt, bis zum Zeitpunkt t3 der Transistor T1 abermals durch-, d. h. eingeschaltet wird, worauf die Spannung U wieder sinkt, bis zum Zeitpunkt t4 der Transistor T1 wieder ausgeschaltet wird.

Durch das getaktete Ein- und Ausschalten des Stromzweigs 7 über den Transistor T1 stellt sich - geglättet durch den Ladekondensator C2 - für die Spannung U ein zeitlicher Mittelwert ein, welcher sich aus folgender Formel ergibt:

$$U = (I \times R)/D$$

Dabei ist I der von dem Kondensatometzteil 2 gelieferte konstante Strom, R der omische Widerstand des Verbrauchers R2 und D das Verhältnis aus Einschaltund Ausschalt-Zeit (Taktverhältnis) des Transistors T1. Der Konstantstrom I wird durch die Netzspannung sowie die Dimensionierung des Widerstands R1 und vor allem des Kondensators C1 bestimmt. Im Ausführungsbeispiel sei ein Strom I von 10 mA und ein Widerstand R des Verbrauchers R2 von 100 Ohm angenommen. Das Taktverhältnis D ergibt sich aus Figur 2a zu D = (t2 - t1) / (t3 - t1) = 1/20, was eine mittlere Spannung ergibt von U = 10 mA x 100 Ohm x 20 = 20 V.

In Figur 2b ist ein Fall gezeigt, in dem der Transistor T1 doppelt so lang durchgeschaltet, d.h. eingeschaltet ist als in dem Fall von Figur 2a. Hier ist das Taktverhältnis D = (t2' - t1) / (t3 - t1) = 2/20 = 1/10. Demnach ergibt sich hier ein Mittelwert für die Spannung U von U = 10 mA x 100 Ohm x 10 = 10 V. Die Variation des Spannungsverlaufes um diesen Mittelwert von 10V ist in Figur 2b größer als in Figur 2a, da hier der Ladekondensator C2 länger entladen wird und somit die Spannung U stärker einbricht. Allerdings ist dieser Spannungseinbruch in Figur 2b wie auch der in Figur 2a der Deutlichkeit halber stark übertrieben dargestellt.

Aus Figur 2a und Figur 2b ist zu erkennen, dass man durch Variation des Taktverhältnisses D die im zeitlichen Mittel an dem Verbraucher R2 anliegende Spannung U in relativ weiten Bereichen einstellen kann. Auf diese Weise ist es möglich, die Spannung U genau auf einen gewünschten Wert einzustellen, auch wenn z. B. der von dem Kondensatornetzteil 2 gelieferte Konstantstrom I nicht genau bekannt ist oder aufgrund von Bauteiltoleranzen innerhalb einer Produktserie schwankt. Dazu muß der gerade vorherrschende Wert der Spannung U gemessen werden, der gemessene Spannungswert mit dem gewünschten bzw. Sollwert der Spannung U verglichen werden und entsprechend das Taktverhältnis der Ansteuerung des Transistors T1 verändert werden, je nachdem ob die vorherrschende Spannung zu hoch oder zu niedrig ist.

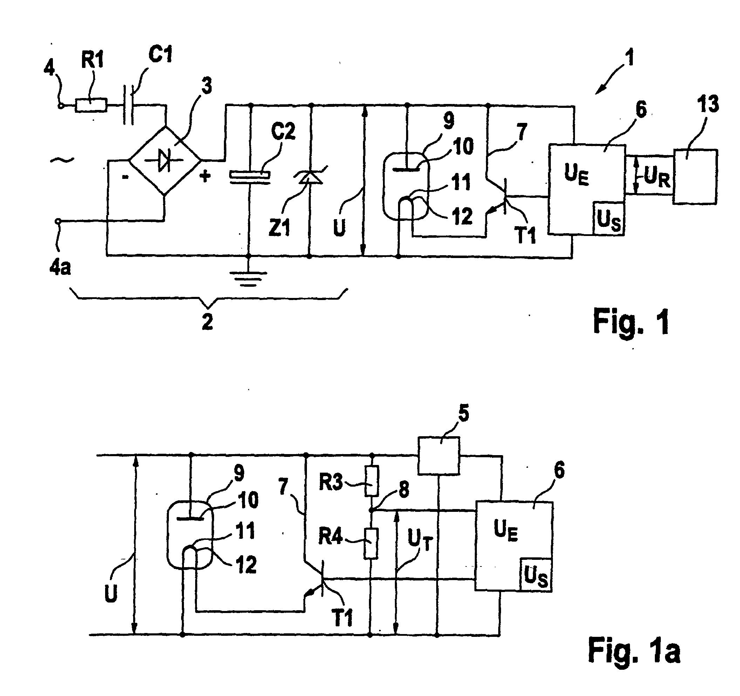

Der Mikrocontroller 6 taktet den Transistor T1 entsprechend dem zeitlichen Verlaufsdiagramm von Figur 2a. Während der Durchschalt-, also Einschaltzeiten des Transistors T1 fließt Strom durch die Heizdrähte der Heizung 12, wodurch diese stark erwärmt werden. Diese Erwärmung reicht aus, auch während der Zeit, in der der Transistor T1 ausgeschaltet ist, genügend Elektronen aus der Anode 11 freizusetzen, die dann zur Kathode 10 beschleunigt werden. Es sei hier angemerkt, dass die Ansteuerung der verschieden Leuchtsegmente des VFD ebenfalls über den Mikrocontroller 6 erfolgt, aber in Figur 1 der Übersichtlichkeit halber nicht gezeichnet ist.

Der Mikrocontroller 6 ist des Weiteren mit einem Spannungsnormal 13 verbunden, welches eine feste Referenzspannung liefert. Diese Referenzspannung ist nötig, damit der Mikrocontroller 6 aus der an seinen Spannungsversorgungseingängen anliegenden Spannung den tatsächlichen Wert der Spannung U ermitteln und daraufhin wie oben beschrieben die Spannung U auf einen gewünschten Sollwert einstellen kann.

Natürlich ist es auch möglich, dass der Mikrocontroller 6 über einen Spannungsregler 5 an die Spannung U angeschlossen ist und die Erfassung des Wertes der Spannung U über die Messung einer an einem Spannungsteiler auftretenden Teilspannung $U_T$ erfolgt. Der an die Ausgänge des Kondensatornetzteils 2 angeschlossene Spannungsregler 5 sorgt dafür, dass der Mikrocontroller 6 stets mit der von ihm benötigten Spannung von 5V versorgt wird. Diese Variation des genannten Ausführungsbeispiels ist in Figur 1a gezeigt.

Dabei wird die vorherrschende Spannung U derart gemessen, dass parallel zum VFD ein Spannungsteiler aus einer Reihenschaltung von Widerständen R3 und R4 geschaltet ist, dessen Teilerabgriff 8 mit dem Mikrocontroller 6 verbunden ist. Somit kann der Mikrocontroller 6 die an dem Widerstand R4 anfallende und mit der Spannung U direkt korrelierte Teilspannung $U_T$ messen und sie z. B. mit einem gespeicherten Teilspannungs-Sollwert vergleichen, welcher sich bei Vorliegen der Sollspannung am Verbraucher R2 ergeben würde.

Falls die Funktion des VFD nicht benötigt wird, ist es weiterhin möglich, mit einem geeigneten Taktverhältnis D die Spannung U so weit zu erniedrigen, dass der Mikrocontroller 6 gerade noch betriebsfähig ist. In diesem Fall fließt der von dem Kondensatometzteil immer und konstant gelieferte Strom über eine verhältnismäßig kleine Spannungsdifferenz ab, so dass auch nur eine verhältnismäßig kleine elektrische Leistung verbraucht wird. Dies ist bei Geräten, die zwar andauernd mit der Netzspannung verbunden sind, bei denen aber die Funktion des VFD nicht dauernd benötigt wird, unter dem Gesichtspunkt der Energieeinsparung, von großem Vorteil.

Ebenso kann natürlich auch im Ausführungsbeispiel nach Figur 1a der Mikrocontroller gemäß Figur 1 direkt an die Spannung U angeschlossen sein. Auch ist es denkbar, dass der Mikrocontroller über einen Spannungsregler 5 an die Spannung U angeschlossen ist, aber zur Messung der Spannung U direkt mit dieser verbunden ist.

**Patentansprüche**

1. Verfahren zur Regelung einer Spannung U in einer elektronischen Schaltung (1) mit einem vorzugsweise als Mikrocontroller ausgeführten Steuerelement (6) und mindestens einem an der Spannung U anliegenden Verbraucher (R2) mit einem ersten ohmschen Widerstand, wobei der Verbraucher (R2) zeitweise bzw. getaktet über einen parallelen Stromzweig (7) mit einem zweiten ohmschen Widerstand, der kleiner ist als der erste, mittels eines vom Steuerelement (6) betätigten elektronischen Schalters (T1) kurzgeschlossen wird und zur Erniedrigung der Spannung U im zeitlichen Mittel das Verhältnis der Einschalt- zur Ausschalt-Zeit (Taktverhältnis) des Schalters (T1) in dem kurzschließenden Stromzweig (7) erhöht und zur Erhöhung der Spannung U das Taktverhältnis des Schalters (T1) erniedrigt wird,

**dadurch gekennzeichnet,**
**dass** zur Versorgung der Schaltung (1) mit elektrischer Energie eine Konstantstromquelle (2), vorzugsweise ein Kondensatometzteil mit Widerstand (R1), Kondensator (C1), Gleichrichter (3) und Ladekondensator (C2), verwendet wird und der Verbraucher durch ein Vakuum-Fluoreszenz-Anzeigeelement (VFD) (9) gebildet ist, wobei die Heizung (12) des VFD in Reihe zu dem elektronischen Schalter (T1) geschaltet ist, der von dem Steuerelement (6) getaktet angesteuert wird, und zur Erniedrigung der Spannung U im zeitlichen Mittel das Taktverhältnis der Heizungsansteuerung über den Schalter (T1) durch das Steuerelement (6) erhöht und zur Erhöhung der Spannung U im zeitlichen Mittel das Taktverhältnis erniedrigt wird.

2. Verfahren nach Anspruch 1,
   **dadurch gekennzeichnet,**
   **dass** zur Verringerung des elektrischen Leistungsverbrauchs der elektronischen Schaltung (1) bei Nichtbenötigung der Funktion des Verbrauchers (R2) die Spannung U durch Erhöhung des Taktverhältnisses des Schalters (T1) in dem kurzschließenden Stromzweig (7) durch das Steuerelement (6) im zeitlichen Mittel erniedrigt wird.

3. Verfahren nach Anspruch 1 oder 2,
   **dadurch gekennzeichnet,**
   **dass** die Spannung U oder eine mit dieser korrelierte Teilspannung $U_T$ dem Steuerelement (6) zugeleitet und von diesem erfasst wird, dass das Steuerelement die erfasste Spannung $U_E$ mit einer in einem Speicher hinterlegten Soll-Spannung $U_S$ vergleicht und das Taktverhältnis des Schalters (T1) erhöht oder erniedrigt, je nachdem ob die erfasste Spannung $U_E$ höher oder niedriger ist als die Soll-Spannung $U_S$.

4. Elektronische Schaltung zur Durchführung des Verfahrens nach einem der Ansprüche 1 bis 3, wobei die Schaltung (1) eine Konstantstromquelle (2), vorzugsweise ein Kondensatornetzteil mit Widerstand (R1), Kondensator (C1), Gleichrichter (3) und Ladekondensator (C2), ein vorzugsweise als Mikrocontroller ausgeführtes Steuerelement (6) und als an der Spannung U anliegenden Verbraucher ein Vakuum-Fluoreszenz-Anzeigeelement (VFD) (9) aufweist, wobei die Heizung (1-2) des VFD (9) durch das Steuerelement (6) über einen elektronischen Schalter (T1), vorzugsweise einen Transistor, getaktet angesteuert wird.

5. Elektronische Schaltung nach Anspruch 4,
   **dadurch gekennzeichnet,**
   **dass** parallel zum VFD (9) ein Spannungsteiler geschaltet ist, der zum Abgriff der Spannung U ausgebildet ist und an dessen mit einem Anschluss des Steuerelementes verbundenen Teilerabgriff (8) die Teilspannung $U_T$ abgegriffen wird.

6. Elektronische Schaltung nach Anspruch 5,
   **dadurch gekennzeichnet,**
   **dass** die Konstantstromquelle (2) als Kondensatornetzteil ausgeführt ist, welches einen Zweiwegegleichrichter (3) aufweist, an dessen einem Eingang der eine Anschluss (4) der Netzspannung über eine Reihenschaltung eines Widerstandes (R1) und eines Kondensators (C1), an dessen anderem Eingang der andere Anschluss (4a) der Netzspannung anliegt, und an dessen zwei Ausgängen (+, -) eine Parallelschaltung eines Ladekondensators (C2) und einer in Spernichtung geschalteten Zener-Diode (Z1) angeschlossen ist,
   **dass** der eine Ausgang (-) des Zweiwegegleichrichters (3) geerdet ist,
   **dass** an die Ausgänge (+, -) des Zweiwegegleichrichters (3) weiterhin als Verbraucher ein Vakuum-Fluoreszenz-Anzeigeelement (VFD) (9) sowie ein Spannungsregelelement (5) angeschlossen sind,
   **dass** der eine Spannungsversorgungseingang eines Mikrocontrollers (6) an den Ausgang des Spannungsregelelementes (5) angeschlossen und der andere Spannungsversorgungseingang geerdet ist,
   **dass** an die Ausgänge des Zweiwegegleichrichters (3) zusätzlich ein Stromzweig (7') angeschlossen ist, der eine Reihenschaltung der Heizung 12 des VFD (9) und eines an den Mikrocontroller (6) angeschlossenen und von diesem gesteuerten Transistorschalters T1 zum Öffnen und Schließen des Stromzweiges (7') aufweist, und
   **dass** an die Ausgänge (+, -) des Zweiwegegleichrichters (3) als Spannungsteiler eine Reihenschaltung zweier Widerstände (R3, R4) oder von Reihen- und/oder Parallelschaltungen von Widerständen angeschlossen ist, wobei der Teilerabgriff (8) des Spannungsteilers mit einem Messeingang des Mikrocontrollers (6) verbunden ist.

**Claims**

1. Method of regulating a voltage U in an electronic circuit (1) with a control element (6), preferably taking the form of a microcontroller, and at least one consumer device (R2) applied to the voltage U with a first ohmic resistance, the consumer device (R2) being short-circuited intermittently or in cycles via a parallel branch circuit (7) with a second ohmic resistance, which is less than the first, by means of an electronic switch (T1) operated by the control element (6); and for lowering the voltage U the ratio of the make-time to the break-time (pulse duty factor) of the switch (T1) in the short-circuiting branch circuit (7) is increased in the time average, and for increasing the voltage U the pulse duty factor of the switch (T1) is reduced, **characterized in that,** for supplying the circuit (1) with electric energy, a constant-current source (2), preferably a capacitor power supply with resistor (R1), capacitor (C1), rectifier (3) and charging capacitor (C2), is used, and the consumer device takes the form of a vacuum fluorescent display element (VFD) (9), the heating (12) of the VFD being connected in series with the electronic switch (T1), which is controlled in cycles by the control element (6), and for lowering the voltage U the pulse duty factor of the heating control is increased by the control element (6) in the time average by way of the switch (T1), and for increasing the voltage U the pulse duty factor is reduced in the time average.

2. Method according to Claim 1, **characterized in that** for reducing the electric power consumption of the electronic circuit (1) when operation of the consumer device (R2) is not required, the voltage U is lowered in the time average by increasing the pulse duty factor of the switch (T1) in the short-circuiting branch circuit (7) by means of the control element (6).

3. Method according to Claim 1 or 2, **characterized in that** the voltage U, or a partial voltage $U_T$ correlated with this, is supplied to the control element (6) and measured by this, **in that** the control element compares the measured voltage $U_E$ with a reference voltage $U_S$ stored in a memory and increases or reduces the pulse duty factor of the switch (T1) depending on whether the measured voltage $U_E$ is higher or lower than the reference voltage $U_S$.

4. Electronic circuit for implementing the method according to one of Claims 1 to 3, the circuit (1) having a constant-current source (2), preferably a capacitor power supply with resistor (R1), capacitor (C1), rectifier (3) and charging capacitor (C2), a control element (6) preferably taking the form of a microcontroller and a vacuum fluorescent display element (VFD) (9) as consumer device being applied to the voltage U, in which case the heating (12) of the VFD (9) is controlled in cycles by the control element (6) via an electronic switch (T1), preferably a transistor.

5. Electronic circuit according to Claim 4, **characterized in that** connected in parallel with the VFD (9) is a voltage divider which is designed for tapping of the voltage U, and the partial voltage $U_T$ is tapped at its divider tap (8) which is connected to a terminal of the control element.

6. Electronic circuit according to Claim 5, **characterized in that** the constant-current source (2) takes the form of a capacitor power supply which includes a full-wave rectifier (3), one terminal (4) of the mains voltage being applied to one of its inputs via a series connection of a resistor (R1) and a capacitor (C1), and the other terminal (4a) of the mains voltage being applied to its other input, and a parallel connection of a charging capacitor (C2) and a Zener diode (Z1) connected in inverse direction being connected to its two outputs (+, -),
**in that** one output (-) of the full-wave rectifier (3) is earthed, **in that** in addition a vacuum fluorescent display element (VFD) (9) as consumer device and also a voltage-regulating element (5) are connected to the outputs (+, -) of the full-wave rectifier (3),
**in that** one voltage supply input of a microcontroller (6) is connected to the output of the voltage-regulating element (5) and the other voltage supply input is earthed,
**in that** in addition a branch circuit (7'), including a series connection of the heating (12) of the VFD (9) and of a transistor switch (T1) connected to the microcontroller (6) and controlled by the latter for opening and closing the branch circuit (7'), is connected to the outputs of the full-wave rectifier (3), and
**in that** a series connection of two resistors (R3, R4) or of series connections and/or parallel connections of resistors is connected to the outputs (+, -) of the full-wave rectifier (3) as voltage divider, the divider tap (8) of the voltage divider being connected to a measuring input of the microcontroller (6).

**Revendications**

1. Procédé de régulation d'une tension U dans un circuit électronique (1) avec un élément de commande (6), réalisé de préférence comme microcontrôleur, et au moins un récepteur (R2) auquel s'applique la tension U, avec une première résistance ohmique, le récepteur (R2) étant court-circuité temporairement ou de manière cadencée par une branche de courant (7) parallèle avec une deuxième résistance ohmique qui est inférieure à la première, au moyen d'un interrupteur électronique (T1) actionné par l'élément de commande (6), et pour abaisser la tension U, en moyenne dans le temps, le rapport du temps d'enclenchement au temps de coupure (rapport de rythme) de l'interrupteur (T1) est augmenté dans la branche de courant (7) de court-circuit et, pour augmenter la tension U, le rapport de rythme de l'interrupteur (T1) est abaissé,

**caractérisé**

**en ce que** pour l'alimentation du circuit (1) en énergie électrique, on utilise une source de courant constante (2), de préférence un bloc d'alimentation de condensateur avec résistance (R1), condensateur (C1), redresseur (3) et condensateur de charge (C2), et le récepteur est formé par un élément d'affichage fluorescent sous vide (VFD) (9), le chauffage (12) du VFD étant couplé en série avec l'interrupteur électronique (T1) qui est commandé de manière rythmée par l'élément de commande (6), et pour abaisser la tension U, en moyenne dans le temps, le rapport de rythme de la commande du chauffage est augmenté, à travers l'interrupteur (T1), par l'élément de commande (6), et pour augmenter la tension U, en moyenne dans le temps, le rapport de rythme est abaissé.

2. Procédé selon la revendication 1, **caractérisé en ce que** pour réduire la consommation de puissance électrique du circuit électronique (1), lorsque le fonctionnement du récepteur (R2) n'est pas nécessaire, la tension U est abaissée en moyenne dans le temps par augmentation du rapport de rythme de l'interrupteur (T1) dans la branche de courant (7) de court-circuit, par l'élément de commande (6).

3. Procédé selon la revendication 1 ou 2, **caractérisé en ce que** la tension U ou une tension partielle $U_T$ corrélée à celle-ci est acheminée vers l'élément de commande (6) et est détectée par celui-ci, **en ce que** l'élément de commande compare la tension $U_E$ détectée à une tension de consigne $U_S$ enregistrée dans une mémoire, et le rapport de rythme de l'interrupteur (T1) est augmenté ou abaissé, suivant que la tension $U_E$ détectée est supérieure ou inférieure à la tension de consigne $U_S$.

4. Circuit électronique pour la mise en oeuvre du procédé selon l'une des revendications 1 à 3, dans lequel le circuit (1) comporte une source de courant constante (2), de préférence un bloc d'alimentaiton de condensateur avec résistance (R1), condensateur (C1), redresseur (3) et condensateur de charge (C2), un élément de commande (6) réalisé de préférence comme microcontrôleur et comme récepteur auquel s'applique la tension U, un élément d'affichage à fluorescence sous vide (VFD) (9), le chauffage (12) du VFD (9) étant commandé de manière rythmée par l'élément de commande (6), à travers un interrupteur électronique (T1), de préférence un transistor.

5. Circuit électronique selon la revendication 4, **caractérisé en ce que** parallèlement au VFD (9) est couplé un diviseur de tension qui est conçu pour le prélèvement de la tension U et la tension partielle $U_T$ étant prélevée à la prise de diviseur (8) reliée à une connexion de l'élément de commande.

6. Circuit électronique selon la revendication 5, **caractérisé en ce que** la source de courant constante (2) est réalisée comme bloc d'alimentation de condensateur qui comporte un redresseur à deux voies (3) à une entrée duquel est relié un branchement (4) de la tension du réseau par un circuit série d'une résistance (R1) et d'un condensateur (C1), à l'autre entrée duquel est relié l'autre branchement (4a) de la tension du réseau, et aux deux sorties (+, -) duquel est raccordé un circuit parallèle d'un condensateur de charge (C2) et d'une diode Zener (Z1) commandée dans le sens de blocage, **en ce qu'**une sortie (-) du redresseur à deux voies (3) est mise à la terre, **en ce qu'**aux sorties (+, -) du redresseur à deux voies (3) sont raccordés en outre comme récepteurs un élément d'affichage à fluorescence sous vide (VFD) (9) ainsi qu'un élément de tension (5), **en ce qu'**une entrée de l'alimentation en tension d'un microcontrôleur (6) est raccordée à la sortie de l'élément de régulation de la tension (5) et l'autre entrée d'alimentation en tension est mise à la terre, **en ce qu'**aux sorties du redresseur à deux voies (3) est raccordée en outre une branche de courant (7') qui comporte un circuit série du chauffage (12) du VFD (9) et d'un interrupteur à transistor (T1) raccordé au microcontrôleur (6) et commandé par celui-ci, pour l'ouverture et la fermeture de la branche de courant (7'), et **en ce qu'**aux sorties (+, -) du redresseur à deux voies (3) est raccordé, comme diviseur de tension, un circuit série de deux résistances (R3, R4) ou de circuits série et/ou circuits parallèles de résistances, la prise de diviseur (8) du diviseur de tension étant reliée à une entrée de mesure du microcontrôleur (6).

Fig. 1

Fig. 1a

8

Fig. 2a

Fig. 2b